# EUROPEAN PATENT SPECIFICATION

(11) **EP 2 997 358 B1**
(45) Date of publication and mention of the grant of the patent: **04.07.2018**
(21) Application number: 13884477.4
(22) Date of filing: 17.05.2013
(51) Int. Cl.: G01N 27/06, G01F 1/74, F28F 27/02, F28D 7/00

(54) **ARRANGEMENT AND METHOD FOR MONITORING SCALING IN HEAT EXCHANGER**
ANORDNUNG UND VERFAHREN ZUR ÜBERWACHUNG VON ABLAGERUNGEN IN WÄRMETAUSCHER
DISPOSITIF ET PROCÉDÉ DE SURVEILLANCE DE L'ENTARTRAGE DANS UN ÉCHANGEUR THERMIQUE

(43) Date of publication of application: 23.03.2016
(73) Proprietor: Rocsole Ltd., Kuopio, 70210 (FI)
(72) Inventor: LEHIKOINEN, Anssi, FI-70820 Kuopio (FI)
(74) Representative: Papula Oy
(86) International application number: PCT/FI2013/050537
(87) International publication number: WO 2014/184421

(56) References cited:
- EP-A1- 0 756 887
- WO-A1-2011/039416
- WO-A2-2008/103864
- GB-A- 2 473 132
- JP-A- H09 236 397
- US-A- 5 615 733
- US-A- 5 992 505
- US-A1- 2005 133 211
- US-A1- 2007 133 746
- US-B1- 6 241 383

## Description

### FIELD OF THE INVENTION

The present invention relates to monitoring the conditions within industrial process equipment, in particular to monitoring scaling in heat exchangers. EP 2115452 discloses an arrangement and a method having the features in the preamble of claim 1 and 9, respectively.

### BACKGROUND OF THE INVENTION

Heat exchangers are used in various industrial processes to dissipate excess heat from a process or, vice versa, to supply the required external heat to a process. In a heat exchanger, heat is transferred from one heat transfer medium with a higher temperature to another heat transfer medium with a lower temperature.

One commonly used type of heat exchangers is the tubular heat exchanger, wherein one of the heat transfer media is led through a heating piping located within a flow volume filled with the other heat transfer medium. Plate heat exchangers, where the different heat transfer media are separated by plate-like heat conductive separation walls, form another common heat exchanger type. The heat transfer media are typically liquids, e.g. water.

As in various industrial process equipment in general, the conditions within the heat exchangers should be monitored in order to be able to respond to possible changes therein. One specific problem possibly affecting the operation of a heat exchanger is scaling. Scaling, often called also fouling, is a well-known problem which may occur in many different applications in process industry.

Scaling means generally deposition or accumulation of unwanted material on the surfaces of pipes, vessels, or other containers used for leading or storing flowable materials. As a result of scaling, an extra layer of solid material is formed on such surface. Thereby, the free volume within the pipe or container, open for the presence of a flowable material, is changed. This can lead to many problems. For example, the changed shape of the free volume causes disturbances to the fluid flow, and the reduced cross-sectional area of the free inner volume of a process pipe or other flow volume increases the flow resistance through the pipe/flow volume. In a heat exchanger, these effects deteriorate the heat exchange efficiency. In an extreme case, the piping wherein scaling is formed can even be entirely clogged.

Formation of scaling can be prevented by use of suitable chemicals reducing the rate of scale formation. Alternatively, the material formed on the surfaces of process equipment by scaling can be removed from time to time which, however, maybe very burdensome. In any case, the conditions within a heat exchanger, including possible scaling, should be monitored, most preferably continuously on-line without interrupting the actual heat transfer process at issue, in order to be able to take appropriate measures to prevent scale formation or remove the already accumulated scale material.

In prior art, scaling has been monitored or diagnosed e.g. with camera-based techniques, wherein a camera is installed in the process equipment to be analyzed, with acoustic (typically ultrasound) methods, or by simple mechanical methods in which special test objects are mounted onto the pipe walls. For example, EP 2115452 discloses as a specific example of an apparatus and method for measuring scaling within a spiral wound membrane by transmitting acoustic signal into a tube, measuring the signal reflected from a material interface inside the tube, and comparing the measurement result with a reference signal from a known, clean tube.

The industrial-scale heat exchangers are usually very large systems. For example, in a tubular heat exchanger, the flow volume can be formed e.g. by a 10 to 20 m long cylinder with tens or hundreds of meters of heating piping circulating therein. Typically, the flow volume and/or the heating piping is pressurized. This makes monitoring of the internal conditions within the heat exchanger very challenging. Installing any scaling detecting equipment within the heat exchanger may be even impossible, or it may require at least very expensive arrangements.

### PURPOSE OF THE PRESENT INVENTION

It is a purpose of the present invention to provide novel solutions enabling on-line monitoring of scaling in heat exchangers.

### SUMMARY OF THE INVENTION

The present invention in characterized by what is disclosed in claims 1 and 8.

According to a first aspect, the present invention is focused on an arrangement for monitoring scaling in a primary heat exchanger. In one embodiment, the primary heat exchanger is a primary tubular heat exchanger having a primary flow volume for a first heat transfer fluid, the primary flow volume being connected to a first inlet pipe and a first outlet pipe for conveying the first heat transfer fluid to and from the primary flow volume, respectively. Further, the tubular heat exchanger comprises also a primary heating piping located within the primary flow volume for a second heat transfer fluid, the primary heating piping being connected to a second inlet pipe and a second outlet pipe for conveying the second heat transfer fluid to and from the primary piping.

The primary tubular heat exchanger can be configured according to the principles known in the art. For example, the primary flow volume can be formed as a cylindrical vessel wherein the first heat transfer fluid can flow and be present, and wherein the primary heating piping may be formed as a single, straight tube or e.g. as a long piping circulating within the primary flow volume. The operation principle of a tubular heat exchanger is based on heat transfer between the first heat transfer fluid in the primary flow volume and the second heat transfer fluid in the primary heating piping. Heat is transferred from the heat transfer fluid with a higher temperature to that of a lower temperature. "Heating" in the expression "heating piping" just refers to the fact that one of the heat transfer fluids is heated, irrespective of whether this is the first or the second heat transfer fluid.

The first and the second heat transfer fluids can be any gases or liquids suitable for the heat transfer process in a tubular heat exchanger. Most typically, the heat transfer fluids in industrial processes are water or other process liquids handled in the processes.

According to the present invention, the arrangement comprises a secondary heat exchanger, which in one embodiment is a secondary tubular heat exchanger having a secondary flow volume which is connected to the first inlet pipe and the first outlet pipe of the primary tubular heat exchanger for conveying a secondary flow of the first heat transfer fluid to and from the secondary flow volume, respectively. Further, the arrangement comprises a secondary heating piping located within the secondary flow volume and connected to the second inlet pipe and the second outlet pipe of the primary tubular heat exchanger for conveying a secondary flow of the second heat transfer fluid to and from the secondary piping.

The secondary tubular heat exchanger thus comprises elements corresponding to those of the primary tubular heat exchanger. Moreover, the secondary flow volume being connected to the first inlet pipe and to the first outlet pipe of the primary tubular heat exchanger means that the secondary flow volume is open for the flow of the first heat transfer fluid, i.e. the same heat transfer fluid which flows through the primary flow volume. Similarly, the secondary heating piping being connected to the second inlet pipe and to the and second outlet pipe of the primary tubular heat exchanger is open for the flow of the same second heat transfer fluid which flows through the primary heating piping.

Further, according to the present invention, the arrangement also comprises a scaling detecting apparatus installed to detect scaling in the secondary heat exchanger as an indication of scaling in the primary heat exchanger.

Thus, the basic operation principle of the arrangement is based on indirect monitoring of scaling in the primary heat exchanger via the secondary heat exchanger simulating the conditions within the primary heat exchanger, and therefore indicating the scaling conditions in the primary heat exchanger. This principle provides many advantages. No scaling detecting apparatus is required to be installed in the possibly very large and pressurized primary heat exchanger itself. The secondary heat exchanger may be formed as a substantially smaller equipment as the actual primary heat exchanger. As a great advantage, the assembly and maintenance of the scaling detecting apparatus and the entire secondary heat exchanger can be performed without disturbing the operation of the primary heat exchanger simply by disconnecting, e.g. by means of suitable valve means, the secondary tubular heat exchanger from the inlet and the outlet pipes of the primary tubular heat exchanger.

The basic principle of indirect monitoring of scaling in a primary heat exchanger via a secondary heat exchanger is also applicable to other types of heat exchangers than the tubular heat exchangers. In such cases, instead of the primary flow volume and a primary heating piping located therein, the primary heat exchanger may comprise just any type of a primary first flow volume and a primary second flow volume, separated from each other by a primary heat conductive separation wall(s), and being connected to first and second inlet and outlet pipes, similarly to the primary tubular heat exchanger described above. Correspondingly, the secondary heat exchanger may comprise a secondary first flow volume and a secondary second flow volume, separated from each other by a secondary heat conductive separation wall(s), and being connected to the first and the second inlet and outlet pipes of the primary heat exchanger, similarly to the secondary tubular heat exchanger described above. In other words, such arrangement differs from the arrangement described above, based on tubular heat exchangers, in that the "flow volumes" are replaced with "first flow volumes", and the "heating pipings" are replaced with "second flow volumes", and the "heat conductive separation walls" correspond to the walls of the "heating pipings". The operation of such heat exchanger is based on heat transfer between the two heat transfer fluids through the heat conductive separation wall.

With regard to the terminology, the expression "primary" refers in this document to the actual, operational heat exchanger. Respectively, "secondary" refers to an auxiliary heat exchanger via which the scaling in the primary heat exchanger is monitored. Thus, the expression "secondary" could be replaced e.g. with an expression "auxiliary", when the expression "primary" could be omitted. Further, the terms "primary" and "secondary" should not be mixed with the terms "first" and "second", respectively, the latter ones referring to the different parts within one single heat exchanger.

The present invention is suitable for monitoring scaling wherein the scale formation is dominated by processes such as, for example, precipitation fouling, as crystallization of solid salts, oxides and hydroxides from water solutions, for example, calcium carbonate or calcium sulfate; particulate fouling, i.e., accumulation of particles, typically colloidal particles, on a surface; corrosion fouling, i.e., in-situ growth of corrosion deposits, for example, magnetite on carbon steel surfaces; chemical reaction fouling, for example, decomposition or polymerization of organic matter on heating surfaces; solidification fouling - when components of the flowing fluid with a high-melting point freeze onto a sub-cooled surface; biofouling, like settlements of bacteria and algae; or composite fouling, whereby fouling involves more than one fou-lant or fouling mechanism.

As known, the material of the process pipes may affect the scaling formation thereon. Therefore, to ensure that the scaling detected in the secondary tubular heat exchanger corresponds to and represents the scaling conditions in the actual primary tubular heat exchanger, the secondary heating piping is preferably formed of the same material as the primary heating piping. Similarly, in the case of heat exchangers of some other type, the primary and the secondary heat conductive separation walls are preferably formed of the same material.

Another factor possibly affecting the scaling formation, in particular on the inner surface of the heating piping, is the size and shape of the piping. Therefore, the secondary heating piping has preferably substantially the same cross-sectional shape and size as the primary heating piping. In cases where the heating piping comprises a long, circulating pipe or a plurality of single pipes, said cross-sectional shape and size mean the cross-sectional shape and size of such pipe, not the whole pipe assembly forming the heating piping. Correspondingly, in the case of heat exchangers of some other type, the primary and the secondary first flow volumes, and the primary and the secondary second flow volumes, are preferably formed so as to have the same sizes and shapes.

To unify the conditions within the primary and the secondary heat exchangers, the arrangement may further comprise temperature control means for controlling the temperatures of the secondary flows of the first and the second heat transfer fluids according to the temperatures of the first and the second heat transfer fluids in the first inlet pipe and in the second inlet pipe, respectively. Such temperature control means can comprise any known types of thermometers, heaters, etc.

In tubular heat exchangers as defined above, scaling is typically formed of the substances of the second heat transfer fluid on the inner surface of the heating piping. Thus, the scaling detecting apparatus preferably comprises an inner scaling sensor configured to detect scaling on the inner surface of the secondary heating piping.

However, also scaling of substances contained in the first heat transfer fluid can be formed on the outer surface of the heating piping. In one embodiment, the scaling detecting apparatus comprises therefore an outer scaling sensor configured to detect scaling on the outer surface of the secondary heating piping.

To monitor scaling both on the inner and on the outer surfaces of the secondary heating piping, the arrangement according to the present invention can comprise both an inner scaling sensor and an outer scaling sensor.

In the case of heat exchangers of some other type, scaling is typically formed on the heat conductive separation walls, thus scaling sensor(s) are preferably configured to detect scaling on the surface(s) of the heat conductive separation walls.

In principle, the scaling detecting apparatus can be based on any known scaling monitoring technology. However, in one preferred embodiment, the scaling detecting apparatus is configured to detect scaling by means of electrical capacitance tomography (ECT).

Electrical capacitance tomography ECT is one specific field within the more general field of electrical tomography. ECT as such is a known technique allowing non-invasive monitoring of a target domain on the basis of determination of the permittivity within the target domain.

In general, ECT comprises providing a mathematical model of the target domain and the measurement arrangement, making capacitance-related measurements, and adjusting the mathematical model so as to reduce the differences between the simulated and the measured electrical quantity values until a sufficient consistency exist, after which the permittivity in the target domain is determined. Typically, this is implemented by generating an image of the permittivity distribution in the target domain. Permittivity distribution, and in particular abrupt changes thereof provide information on the internal material properties and distributions within the target domain.

A typical example of utilization of ECT is imaging a multi-phase flow in an industrial process, wherein an image showing the areas or volumes of different phases within the material flow is generated. An example of this kind of method and different practical issues involved therein is discussed in US 7496450 B2.

Recently, the inventors have found it being possible to use ECT also for monitoring scaling of undesired deposit on process equipment surfaces in various industrial processes. In the context of the present invention, the interest in the permittivity distribution properties is focused on the indications of the presence of scale material on the heating piping surfaces or, more generally, on the surfaces of the secondary heat conductive separation wall.

In the case of the scaling detecting apparatus being configured to detect scaling by means of electrical capacitance tomography (ECT), the apparatus can comprise, in addition to one or more scaling sensors for performing the actual measurements, also computing means for performing the computations required to reconstruct the permittivity distribution.

According to a method aspect, the present invention is also focused on a method for monitoring scaling in a primary heat exchanger, which in one embodiment is a primary tubular heat exchanger having a primary flow volume for a first heat transfer fluid, connected to a first inlet pipe and a first outlet pipe for conveying the first heat transfer fluid to and from the primary flow volume, respectively, and a primary heating piping located within the primary flow volume for a second heat transfer fluid, connected to a second inlet pipe and a second outlet pipe for conveying the second heat transfer fluid to and from the primary piping.

According to the present invention, in the case of tubular heat exchanger configuration, the method comprises conveying a secondary flow of the first heat transfer fluid from the first inlet pipe to a secondary flow volume and further to the first outlet pipe, and conveying a secondary flow of the second heat transfer fluid from the second inlet pipe to a secondary heating piping within the secondary flow volume and further to the second outlet pipe. Further, the method comprises detecting scaling on the secondary heating piping as an indication of scaling on the primary heating piping. In other words, scaling is actually detected on the secondary heating piping. Scaling conditions on the secondary heating piping provides an indication on the scaling conditions on the primary heating piping. Thus, conclusions on the latter can be made on the basis of the former.

Similarly to the arrangement aspect described above, also the method of the present invention is applicable to any type of heat exchangers where, instead of a "flow volume" and a "heating piping" located therein, there are first and second flow volumes in any form, separated from each other by a heat conductive separation wall. Scaling is then detected on one or more of the surfaces of the heat conductive separation wall.

The secondary heating piping wherein the secondary flow of the second heat transfer fluid is conveyed is preferably formed of the same material as the primary heating piping. Similarly, in the case of heat exchangers of some other type, the primary and the secondary heat conductive separation walls are preferably formed of the same material.

The secondary heating piping wherein the secondary flow of the second heat transfer fluid is conveyed has preferably substantially the same cross-sectional shape and size as the primary heating piping. Correspondingly, in the case of heat exchangers of some other type, the primary and the secondary first flow volumes, and the primary and the secondary second flow volumes, are preferably formed so as to have the same sizes and shapes.

Preferably, the method further comprises controlling the temperatures of the secondary flow of the first heat transfer fluid and the secondary flow of the second heat transfer fluid according to the temperatures of the first and the second heat transfer fluids in the first inlet pipe and in the second inlet pipe, respectively.

In the method, scaling can be detected on one or both of the inner and the outer surfaces of the secondary heating piping or, more generally, on the surfaces of the secondary heat conductive separation wall.

Preferably, scaling is detected by means of electrical capacitance tomography.

What is stated above about the advantages and the details of the arrangement according to the present invention apply, mutatis mutandis, to the method of the present invention also.

### DETAILED DESCRIPTION

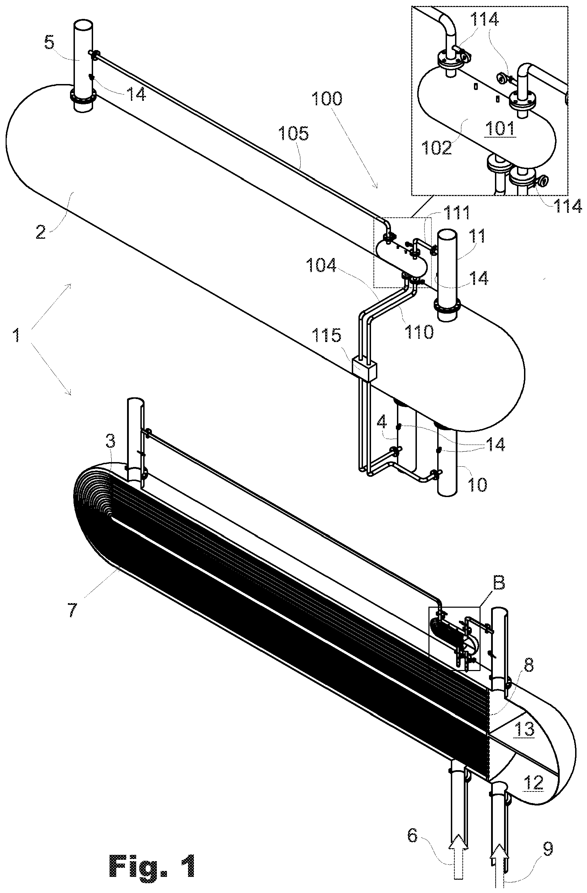

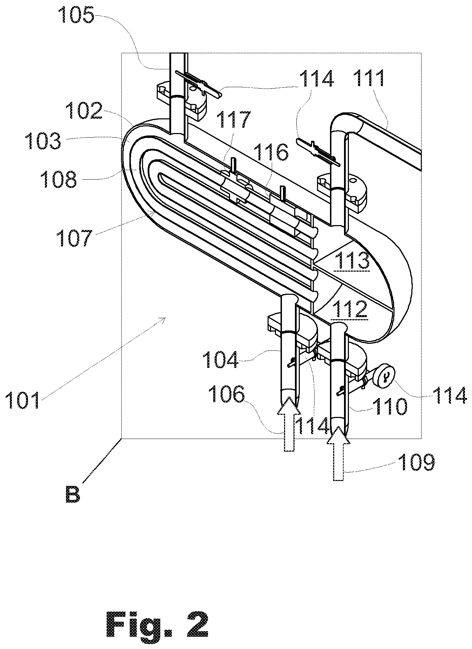

In the following, exemplary embodiments of the present invention are described with reference to the accompanying drawings, wherein Figure 1 illustrates, as a perspective and as a cross-sectional view, a system comprising a tubular heat exchanger and an arrangement for monitoring scaling therein, and Figure 2 shows a partial enlargement of the arrangement shown in Figure 1.

Figure 1 presents a primary tubular heat exchanger 1 (hereinafter abbreviated as "primary heat exchanger") with a cylindrical, cigar-shaped outer shell 2 enclosing therein a primary flow volume 3. The primary flow volume is in a flow connection with a first inlet pipe 4 as well as a first outlet pipe 5 for supplying a first heat transfer fluid 6 to and from the primary flow volume. A primary heating piping 7 comprising a plurality of u-shaped piping sections 8 is formed within the primary flow volume for a second heat transfer fluid 9 so that heat can be transferred between the first and the second heat transfer fluids through the walls of the primary heating piping 7. The piping sections are in a flow connection with a second inlet pipe 10 and a second outlet pipe 11 via an inlet chamber 12 and an outlet chamber 13, respectively, for supplying the second heat transfer fluid to and from the primary heating piping 7.

The primary heat exchanger 1 of the example of Figure 1 may be e.g. 12 m long and may have a diameter of the cylindrical outer shell of 2 m, wherein the volumes of the primary flow volume 3 and primary heating piping 7 may be e.g. about 12 m³ and about 8 m³, respectively. However, these are just examples of suitable dimensions.

A scaling-monitoring arrangement 100 is connected to the primary heat exchanger 1 for monitoring scaling therein. The arrangement comprises a secondary tubular heat exchanger 101 (hereinafter abbreviated as "secondary heat exchanger") with a structure similar to that of the primary tubular heat exchanger 1. Similarly to the primary tubular heat exchanger, also the secondary heat exchanger has a cylindrical, cigar-shaped outer shell 102 enclosing therein a secondary flow volume 103 (illustrated as enlarged in figure 2). The secondary flow volume is in a flow connection with a first auxiliary inlet pipe 104 as well as a first auxiliary outlet pipe 105. A secondary heating piping 107 comprising two u-shaped piping sections 108 is formed within the secondary flow volume 109. The piping sections are in a flow connection with a second auxiliary inlet pipe 110 and a second auxiliary outlet pipe 111 via a secondary inlet chamber 112 and a secondary outlet chamber 113, respectively.

The parts of the secondary heat exchanger 101 are formed of the same material(s) as the corresponding parts of the primary heat exchanger 1. Further, the piping sections 108 of the secondary heating piping 107 are formed so as to have the same shape with a circular cross-section as the piping sections 8 of the primary heating piping 7. Further, also the cross-sectional sizes of those piping sections are the same. The diameter of the cross-section of the piping sections can be e.g. about 40 mm.

The first auxiliary inlet pipe 104 and the first auxiliary outlet pipe 105 are connected to the first inlet pipe 4 and to the first outlet pipe 5 of the primary heat exchanger, respectively, for generating and conveying a secondary flow 106 of the first heat transfer fluid from the first inlet pipe 4 to the secondary flow volume and further to the first outlet pipe.

Similarly, the second auxiliary inlet pipe 110 and the second auxiliary outlet pipe 111 are connected to the second inlet pipe 10 and to the second outlet pipe 11 of the primary heat exchanger, respectively, for generating and conveying a secondary flow 109 of the second heat transfer fluid from the second inlet pipe 10 to the secondary heating piping 107 and further to the second outlet pipe 5.

The length and the diameter of the outer shell 102 of the second heat exchanger 101 may be e.g. about 1.1 m and 0.35 m, respectively. With these dimensions, the volumes of the secondary flow volume 103 and the secondary heating piping 107 may be e.g. about 75 l and 50 l, respectively.

The arrangement 100 comprises thermometers 14, 114 installed to measure the temperatures in all the inlet and outlet pipes and in the auxiliary inlet and the auxiliary outlet pipes. To unify the internal temperatures in the two heat exchangers, the arrangement further comprises a temperature control unit 115 arranged to collect (the connections not shown in the Figures) the temperature data from the thermometers and to adjust the temperature in the first and the second auxiliary inlet pipes 104, 105 so as to match the temperatures in the first and the second inlet pipes 4, 10 of the primary heat exchanger 1.

To summarize, the secondary heat exchanger 101 provides a miniaturized model of the primary heat exchanger, wherein the same heat transfer fluids are flown in same temperatures in those two heat exchangers. This means that the secondary heat exchanger provides a simulation of the internal conditions within the primary heat exchanger.

As shown more clearly in Figure 2, two ECT sensors 116, 117 are installed in the secondary heat exchanger 101 to detect the presence of scaling on the secondary heating piping 107. One of the ECT sensors 116 is configured to detect scaling on the inner surface of the secondary heating piping 107, whereas the other sensor 117 is configured to detect scaling on the outer surface of the same heating piping 107. The sensors can be configured according to the principles known in the art. For example, the inner scaling sensor 116 may be configured to be installed as a part of the secondary heating piping, the sensor comprising electrodes located in an annular assembly around the secondary heating piping inner volume to measure capacitances between different electrode pairs over said inner volume. The outer scaling sensor 117, in turn, may be configured to be installed to surround the secondary heating piping 107, the sensor comprising electrodes to measure capacitances between the electrode pairs via the exterior of the secondary heating piping 107, i.e. via the secondary flow volume 103.

By means of the ECT scaling sensors 116, 117, permittivity distributions within the secondary heating piping 107 and within the secondary flow volume 103 near the secondary heating piping surfaces can be determined. The presence of scale on the surfaces of the secondary heating piping 107 can be further determined on the basis of the permittivity distributions. Thereby determined scaling can further be considered as an indication of the scaling conditions within the primary heat exchanger 1.

Naturally, the ECT sensors 116, 117 need to be controlled and the measurement data therefrom collected and processed appropriately in order to determine said permittivity distributions. For these purposes, the sensors may be connected to any appropriate means (not shown in the Figures) comprising e.g. one or more computers with suitable software installed therein. Such means can be configured according to the principles known in the art.

It is important to note that the present invention is not limited to the examples described above. Instead, the embodiments of the present invention may freely vary within the scope of the claims. For example, the basic configuration and structure of the tubular heat exchangers can differ from those examples above. In particular, the present invention is not limited to tubular heat exchangers only but is applicable also, for example, to plate heat exchangers.

## Claims

1. An arrangement (100) for monitoring scaling in a primary heat exchanger (1) having
- a primary first flow volume (3) for a first heat transfer fluid (6), connected to a first inlet pipe (4) and a first outlet pipe (5) for conveying the first heat transfer fluid to and from the primary first flow volume, respectively, and
- a primary second flow volume (7) separated from the primary first flow volume (3) by a primary heat conductive separation wall (7) for a second heat transfer fluid (9), connected to a second inlet pipe (10) and a second outlet pipe (11) for conveying the second heat transfer fluid to and from the primary second flow volume (7), respectively; **characterized in that** the arrangement (100) comprises a secondary heat exchanger (101) having
- a secondary first flow volume (103), connected to the first inlet pipe (4) and the first outlet pipe (5) for conveying a secondary flow of the first heat transfer fluid (106) to and from the secondary first flow volume, respectively, and
- a secondary second flow volume (107) separated from the secondary first flow volume (103) by a secondary heat conductive separation wall (107), connected to the second inlet pipe (10) and the second outlet pipe (11) for conveying a secondary flow of the second heat transfer fluid (109) to and from the secondary second flow volume, respectively;
and a scaling detecting apparatus (116, 117) installed to detect scaling in the secondary heat exchanger (101) as an indication of scaling in the primary heat exchanger (1).

2. An arrangement (100) as defined in claim 1 for monitoring scaling in a primary tubular heat exchanger (1) having
- a primary flow volume (3) for a first heat transfer fluid (6), connected to a first inlet pipe (4) and a first outlet pipe (5) for conveying the first heat transfer fluid to and from the primary flow volume, respectively, and
- a primary heating piping (7) within the primary flow volume (3) for a second heat transfer fluid (9), connected to a second inlet pipe (10) and a second outlet pipe (11) for conveying the second heat transfer fluid to and from the primary heating piping, respectively;
**characterized in that** the arrangement (100) comprises a secondary tubular heat exchanger (101) having
- a secondary flow volume (103), connected to the first inlet pipe (4) and the first outlet pipe (5) for conveying a secondary flow of the first heat transfer fluid (106) to and from the secondary flow volume, respectively, and
- a secondary heating piping (107) within the secondary flow volume (103), connected to the second inlet pipe (10) and the second outlet pipe (11) for conveying a secondary flow of the second heat transfer fluid (109) to and from the secondary piping, respectively;
and a scaling detecting apparatus (116, 117) installed to detect scaling in the secondary tubular heat exchanger (101) as an indication of scaling in the primary tubular heat exchanger (1).

3. An arrangement (100) as defined in claim 2, wherein the secondary heating piping (107) is formed of the same material as the primary heating piping (7).

4. An arrangement (100) as defined in claim 2 or 3, wherein the secondary heating piping (107, 108) has substantially the same cross-sectional shape and size as the primary heating piping (7, 8).

5. An arrangement (100) as defined in any of claims 1 to 4, further comprising temperature control means (14, 114, 115) for controlling the temperatures of the secondary flows of the first and the second heat transfer fluids (106, 109) according to the temperatures of the first and the second heat transfer fluids (6, 9) in the first inlet pipe (4) and in the second inlet pipe (10), respectively.

6. An arrangement (100) as defined in any of claims 2 to 5, wherein the scaling detecting apparatus comprises an inner scaling sensor (116) configured to detect scaling on the inner surface of the secondary heating piping (107).

7. An arrangement (100) as defined in any of claims 2 to 6, wherein the scaling detecting apparatus comprises an outer scaling sensor (117) configured to detect scaling on the outer surface of the secondary heating piping (107).

8. An arrangement (100) as defined in any of claims 1 to 7, wherein the scaling detecting apparatus (116, 117) is configured to detect scaling by means of electrical capacitance tomography.

9. A method for monitoring scaling in a primary heat exchanger (1) having
- a primary first flow volume (3) for a first heat transfer fluid (6), connected to a first inlet pipe (4) and a first outlet pipe (5) for conveying the first heat transfer fluid to and from the primary first flow volume, respectively, and
- a primary second flow volume (7) separated from the primary first flow volume (3) by a primary heat conductive separation wall (7) for a second heat transfer fluid (9), connected to a second inlet pipe (10) and a second outlet pipe (11) for conveying the second heat transfer fluid to and from the primary second flow volume (7), respectively;
**characterized in that** the method comprises
- conveying a secondary flow of the first heat transfer fluid (106) from the first inlet pipe (4) to a secondary first flow volume (103) and further to the first outlet pipe (5),
- conveying a secondary flow of the second heat transfer fluid (109) from the second inlet pipe (10) to a secondary second flow volume (107) separated from the secondary first flow volume (103) by a secondary heat conductive separation wall (107) and further to the second outlet pipe (11), and
- detecting scaling on the secondary heat conductive separation wall (107) as an indication of scaling on the primary heat conductive separation wall (7) .

10. A method as defined in claim 9 for monitoring scaling in a primary tubular heat exchanger (1) having
- a primary flow volume (3) for a first heat transfer fluid (6), connected to a first inlet pipe (4) and a first outlet pipe (5) for conveying the first heat transfer fluid to and from the primary flow volume, respectively, and
- a primary heating piping (7) within the primary flow volume (3) for a second heat transfer fluid (9), connected to a second inlet pipe (10) and a second outlet pipe (11) for conveying the second heat transfer fluid to and from the primary piping, respectively;
**characterized in that** the method comprises
- conveying a secondary flow of the first heat transfer fluid (106) from the first inlet pipe (4) to a secondary flow volume (103) and further to the first outlet pipe (5),
- conveying a secondary flow of the second heat transfer fluid (109) from the second inlet pipe (10) to a secondary heating piping (107) within the secondary flow volume (103) and further to the second outlet pipe (11), and
- detecting scaling on the secondary heating piping (107) as an indication of scaling on the primary heating piping (7).

11. A method as defined in claim 10, wherein the secondary heating piping (107) is formed of the same material as the primary heating piping (7).

12. A method as defined in claim 10 or 11, wherein the secondary heating piping (107) has substantially the same cross-sectional shape and size as the primary heating piping (7).

13. A method as defined in any of claims 9 to 12, further comprising controlling the temperatures of the secondary flows of the first and the second heat transfer fluids (106, 109) according to the temperatures of the first and the second heat transfer fluids (6, 9) in the first inlet pipe (4) and in the second inlet pipe (10), respectively.

14. A method as defined in any of claims 10 to 13, wherein detecting scaling comprises detecting scaling on the inner surface of the secondary heating piping (107) .

15. A method as defined in any of claims 20 to 14, wherein detecting scaling comprises detecting scaling on the outer surface of the secondary heating piping (107) .

16. A method as defined in any of claims 9 to 15, wherein scaling is detected by means of electrical capacitance tomography.

## Patentansprüche

1. Eine Anordnung (100) zur Überwachung von Ablagerungen in einem primären Wärmetauscher (1) mit
- einem primären ersten Flussvolumen (3) für ein erstes Wärmetransferfluid (6), das verbunden ist mit einer ersten Einlassleitung (4) und einer ersten Auslassleitung (5) zum Befördern des ersten Wärmetransferfluids (6) jeweils hin zum und weg vom primären ersten Flussvolumen, und
- einem primären zweiten Flussvolumen (7) für ein zweites Wärmetransferfluid (9), das vom primären ersten Flussvolumen durch eine primäre wärmeleitende Trennwand (7) getrennt ist, und, das verbunden ist mit einer zweiten Einlassleitung (10) und einer zweiten Auslassleitung (11) zum Befördern des zweiten Wärmetransferfluids jeweils hin zum und weg vom primären zweiten Flussvolumen (7);
**dadurch gekennzeichnet, dass** die Anordnung (100) umfasst:
einen sekundären Wärmetauscher (101) mit
- einem sekundären ersten Flussvolumen (103), das verbunden ist mit der ersten Einlassleitung (4) und der ersten Auslassleitung (5) zum Befördern eines sekundären Flusses des ersten Wärmetransferfluids (106) jeweils hin zum und weg vom sekundären ersten Flussvolumen, und
- einem sekundären zweiten Flussvolumen (107), das vom sekundären ersten Flussvolumen (103) durch eine sekundäre wärmeleitende Trennwand (107) getrennt ist, und, das verbunden ist mit der zweiten Einlassleitung (10) und der zweiten Auslassleitung (11) zum Befördern eines sekundären Flusses des zweiten Wärmetransferfluids (109) jeweils hin zum und weg vom sekundären zweiten Flussvolumen;
und eine Ablagerungsmessvorrichtung (116, 117), die installiert ist zum Erfassen von Ablagerungen im sekundären Wärmetauscher (101) als Anzeichen von Ablagerungen im primären Wärmetauscher (1).

2. Eine Anordnung (100) nach Anspruch 1 zur Überwachung von Ablagerungen in einem primären röhrenartigen Wärmetauscher (1) mit
- einem primären Flussvolumen (3) für ein erstes Wärmetransferfluid (6), das verbunden ist mit einer ersten Einlassleitung (4) und einer ersten Auslassleitung (5) zum Befördern des ersten Wärmetransferfluids jeweils hin zum und weg vom primären Flussvolumen, und
- einem primären Wärmeleitungssystem (7) innerhalb des primären Flussvolumens (3) und für ein zweites Wärmetransferfluid (9), das verbunden ist mit einer zweiten Einlassleitung (10) und einer zweiten Auslassleitung (11) zum Befördern des zweiten Wärmetransferfluids jeweils hin zum und weg vom primären Wärmeleitungssystem;
**dadurch gekennzeichnet, dass** die Anordnung (100) umfasst:
einen sekundären röhrenartigen Wärmetauscher (101) mit
- einem sekundären Flussvolumen (103), das verbunden ist mit der ersten Einlassleitung (4) und der ersten Auslassleitung (5) zum Befördern eines sekundären Flusses des ersten Wärmetransferfluids (106) jeweils hin zum und weg vom sekundären Flussvolumen, und
- einem sekundären Wärmeleitungssystem (107) innerhalb des sekundären Flussvolumens (103), das verbunden ist mit der zweiten Einlassleitung (10) und der zweiten Auslassleitung (11) zum Befördern eines sekundären Flusses des zweiten Wärmetransferfluids (109) jeweils hin zum und weg vom sekundären Leitungssystem;
und eine Ablagerungsmessvorrichtung (116, 117), die installiert ist zum Erfassen von Ablagerungen im sekundären röhrenartigen Wärmetauscher (101) als Anzeichen von Ablagerungen im primären röhrenartigen Wärmetauscher (1).

3. Eine Anordnung (100) nach Anspruch 2, wobei das sekundäre Wärmeleitungssystem (107) aus demselben Material besteht wie das primäre Wärmeleitungssystem (7).

4. Eine Anordnung (100) nach Anspruch 2 oder 3, wobei das sekundäre Wärmeleitungssystem (107, 108) im Wesentlichen denselben Querschnittsaufbau und dieselbe Größe besitzt wie das primäre Wärmeleitungssystem (7, 8).

5. Eine Anordnung (100) nach einem der Ansprüche 1 bis 4, die zudem Mittel zur Temperaturregelung (14, 114, 115) umfasst, zur Regelung der Temperaturen des sekundären Flusses des ersten und des zweiten Wärmetransferfluids (106, 109) entsprechend den Temperaturen des ersten und des zweiten Wärmetransferfluids (6, 9) in jeweils der ersten Einlassleitung (4) und der zweiten Einlassleitung (10).

6. Eine Anordnung (100) nach einem der Ansprüche 2 bis 5, wobei die Ablagerungsmessvorrichtung einen inneren Ablagerungssensor (116) umfasst, der dazu ausgelegt ist, Ablagerungen an der Innenfläche des sekundären Wärmeleitungssystems (107) zu erfassen.

7. Eine Anordnung (100) nach einem der Ansprüche 2 bis 6, wobei die Ablagerungsmessvorrichtung einen äußeren Ablagerungssensor (117) umfasst, der dazu ausgelegt ist, Ablagerungen an der Außenfläche des sekundären Wärmeleitungssystems (107) zu erfassen.

8. Eine Anordnung (100) nach einem der Ansprüche 1 bis 7, wobei die Ablagerungsmessvorrichtung (116, 117) dazu ausgelegt ist Ablagerungen mit Hilfe von Elektrischer Kapazitäts-Tomografie zu erfassen.

9. Ein Verfahren zur Überwachung von Ablagerungen in einem primären Wärmetauscher (1) unter Verwendung einer Anordnung nach Anspruch 1, mit
- einem primären ersten Flussvolumen (3) für ein erstes Wärmetransferfluid (6), das verbunden ist mit einer ersten Einlassleitung (4) und einer ersten Auslassleitung (5) zum Befördern des ersten Wärmetransferfluids jeweils hin zum und weg vom primären ersten Flussvolumen, und
- einem primären zweiten Flussvolumen (7) für ein zweites Wärmetransferfluid (9), das vom primären ersten Flussvolumen durch eine primäre wärmeleitende Trennwand (7) getrennt ist, und, das verbunden ist mit einer zweiten Einlassleitung (10) und einer zweiten Auslassleitung (11) zum Befördern des zweiten Wärmetransferfluids jeweils hin zum und weg vom primären zweiten Flussvolumen (7);
**dadurch gekennzeichnet, dass** das Verfahren umfasst,
- Befördern eines sekundären Flusses des ersten Wärmetransferfluids (106) von der ersten Einlassleitung (4) zu einem sekundären ersten Flussvolumen (103) und weiter zur ersten Auslassleitung (5),
- Befördern eines sekundären Flusses des zweiten Wärmetransferfluids (109) von der zweiten Einlassleitung (10) zu einem sekundären zweiten Flussvolumen (107), das durch eine sekundäre wärmeleitende Trennwand (107) vom sekundären ersten Flussvolumen (103) getrennt ist, und weiter zur zweiten Auslassleitung (11), und
- Erfassen von Ablagerungen an der sekundären wärmeleitenden Trennwand (107) als Anzeichen von Ablagerungen an der primären wärmeleitenden Trennwand (7).

10. Ein Verfahren nach Anspruch 9 zur Überwachung von Ablagerungen in einem primären röhrenartigen Wärmetauscher (1) mit
- einem primären Flussvolumen (3) für ein erstes Wärmetransferfluid (6), das verbunden ist mit einer ersten Einlassleitung (4) und einer ersten Auslassleitung (5) zum Befördern des ersten Wärmetransferfluids jeweils hin zum und weg vom primären Flussvolumen, und
- einem primären Wärmeleitungssystem (7) innerhalb des primären Flussvolumens (3) und für ein zweites Wärmetransferfluid (9), das verbunden ist mit einer zweiten Einlassleitung (10) und einer zweiten Auslassleitung (11) zum Befördern des zweiten Wärmetransferfluids jeweils hin zum und weg vom primären Wärmeleitungssystem;
**dadurch gekennzeichnet, dass** das Verfahren umfasst,
- Befördern eines sekundären Flusses des ersten Wärmetransferfluids (106) von der ersten Einlassleitung (4) zu einem sekundären Flussvolumen (103) und weiter zur ersten Auslassleitung (5),
- Befördern eines sekundären Flusses des zweiten Wärmetransferfluids (109) von der zweiten Einlassleitung (10) zu einem sekundären Wärmeleitungssystem (107) innerhalb des sekundären Flussvolumens (103) und weiter zur zweiten Auslassleitung (11), und
- Erfassen von Ablagerungen im sekundären Wärmeleitungssystem (107) als Anzeichen von Ablagerungen im primären Wärmeleitungssystem (7).

11. Ein Verfahren nach Anspruch 10, wobei das sekundäre Wärmeleitungssystem (107) aus demselben Material besteht, wie das primäre Wärmeleitungssystem (7).

12. Ein Verfahren nach Anspruch 10 oder 11, wobei das sekundäre Wärmeleitungssystem (107) im Wesentlichen denselben Querschnittsaufbau und dieselbe Größe besitzt wie das primäre Wärmeleitungssystem (7).

13. Ein Verfahren nach einem der Ansprüche 9 bis 12, das zudem das Regeln der Temperatur des sekundären Flusses des ersten und zweiten Wärmetransferfluids (106, 109) entsprechend den Temperaturen des ersten und des zweiten Wärmetransferfluids (6, 9) in jeweils der ersten Einlassleitung (4) und der zweiten Einlassleitung (10) umfasst.

14. Ein Verfahren nach einem der Ansprüche 10 bis 13, wobei das Erfassen von Ablagerungen das Erfassen von Ablagerungen an der Innenwand des sekundären Wärmeleitungssystems (107) umfasst.

15. Ein Verfahren nach einem der Ansprüche 10 bis 14, wobei das Erfassen von Ablagerungen das Erfassen von Ablagerungen an der Außenwand des sekundären Wärmeleitungssystems (107) umfasst.

16. Ein Verfahren nach einem der Ansprüche 9 bis 15, wobei Ablagerungen mit Hilfe von Elektrischer Kapazitäts-Tomografie erfasst werden.

## Revendications

1. Agencement (100) de surveillance de l'entartrage dans un échangeur thermique primaire (1) présentant
- un premier volume de flux primaire (3) pour un premier fluide de transfert de chaleur (6), raccordé à un premier tuyau d'entrée (4) et à un premier tuyau de sortie (5) pour transporter le premier fluide de transfert de chaleur vers et depuis le premier volume de flux primaire, respectivement, et
- un second volume de flux primaire (7) séparé du premier volume de flux primaire (3) par une paroi de séparation thermoconductrice primaire (7) pour un second fluide de transfert de chaleur (9), raccordé à un second tuyau d'entrée (10) et à un second tuyau de sortie (11) pour transporter le second fluide de transfert de chaleur vers et depuis le second volume de flux primaire (7), respectivement ;
**caractérisé en ce que** l'agencement (100) comprend un échangeur thermique secondaire (101) présentant
- un premier volume de flux secondaire (103), raccordé au premier tuyau d'entrée (4) et au premier tuyau de sortie (5) pour transporter un flux secondaire du premier fluide de transfert de chaleur (106) vers et depuis le premier volume de flux secondaire, respectivement, et
- un second volume de flux secondaire (107) séparé du premier volume de flux secondaire (103) par une paroi de séparation thermoconductrice secondaire (107), raccordé au second tuyau d'entrée (10) et au second tuyau de sortie (11) pour transporter un flux secondaire du second fluide de transfert de chaleur (109) vers et depuis le second volume de flux secondaire, respectivement ;
et un appareil de détection d'entartrage (116, 117) installé de manière à détecter l'entartrage dans l'échangeur thermique secondaire (101) en tant qu'indication d'entartrage dans l'échangeur thermique primaire (1).

2. Agencement (100) selon la revendication 1, de surveillance de l'entartrage dans un échangeur thermique tubulaire primaire (1) présentant
- un volume de flux primaire (3) pour un premier fluide de transfert de chaleur (6), raccordé à un premier tuyau d'entrée (4) et à un premier tuyau de sortie (5) pour transporter le premier fluide de transfert de chaleur vers et depuis le premier volume de flux primaire, respectivement, et
- une tuyauterie de chauffage primaire (7) dans le volume de flux primaire (3) pour un second fluide de transfert de chaleur (9), raccordée à un second tuyau d'entrée (10) et à un second tuyau de sortie (11) pour transporter le second fluide de transfert de chaleur vers et depuis la tuyauterie de chauffage primaire, respectivement ;
**caractérisé en ce que** l'agencement (100) comprend un échangeur thermique tubulaire secondaire (101) présentant
- un volume de flux secondaire (103), raccordé au premier tuyau d'entrée (4) et au premier tuyau de sortie (5) pour transporter un flux secondaire du premier fluide de transfert de chaleur (106) vers et depuis le volume de flux secondaire, respectivement et
- une tuyauterie de chauffage secondaire (107) dans le volume de flux secondaire (103), raccordée au second tuyau d'entrée (10) et au second tuyau de sortie (11) pour transporter un flux secondaire du second fluide de transfert de chaleur (109) vers et depuis la tuyauterie secondaire, respectivement ;
et un appareil de détection d'entartrage (116, 117) installé pour détecter l'entartrage dans l'échangeur thermique tubulaire secondaire (101) en tant qu'indication d'entartrage dans l'échangeur thermique tubulaire principal (1).

3. Agencement (100) selon la revendication 2, dans lequel la tuyauterie de chauffage secondaire (107) est formée du même matériau que la tuyauterie de chauffage primaire (7).

4. Agencement (100) selon la revendication 2 ou 3, dans lequel la tuyauterie de chauffage secondaire (107, 108) possède sensiblement la même forme et taille de section transversale que la tuyauterie de chauffage primaire (7, 8).

5. Agencement (100) selon l'une quelconque des revendications 1 à 4, comprenant en outre des moyens de commande de température (14, 114, 115) pour la commande des températures des flux secondaires des premier et des second fluides de transfert de chaleur (106, 109) selon les températures des premier et des second fluides de transfert de chaleur (6, 9) dans le premier tuyau d'entrée (4) et dans le second tuyau d'entrée (10), respectivement.

6. Agencement (100) selon l'une quelconque des revendications 2 à 5, dans lequel l'appareil de détection d'entartrage comprend un capteur d'entartrage intérieur (116) configuré pour détecter l'entartrage sur la surface intérieure de la tuyauterie de chauffage secondaire (107).

7. Agencement (100) selon l'une quelconque des revendications 2 à 6, dans lequel l'appareil de détection d'entartrage comprend un capteur d'entartrage extérieur (117) configuré pour détecter l'entartrage sur la surface extérieure de la tuyauterie de chauffage secondaire (107).

8. Agencement (100) selon l'une quelconque des revendications 1 à 7, dans lequel l'appareil de détection d'entartrage (116, 117) est configuré pour détecter l'entartrage au moyen de la tomographie de capacitance électrique.

9. Procédé de surveillance de l'entartrage dans un échangeur thermique primaire (1) par utilisation d'un agencement selon la revendication 1 présentant
- un premier volume de flux primaire (3) pour un premier fluide de transfert de chaleur (6), raccordé à un premier tuyau d'entrée (4) et à un premier tuyau de sortie (5) pour transporter le premier fluide de transfert de chaleur vers et depuis le premier volume de flux primaire, respectivement, et
- un second volume de flux primaire (7) séparé du premier volume de flux primaire (3) par une paroi de séparation thermoconductrice primaire (7) pour un second fluide de transfert de chaleur (9), raccordé à un second tuyau d'entrée (10) et à un second tuyau de sortie (11) pour transporter le second fluide de transfert de chaleur vers et depuis le second volume de flux primaire (7), respectivement ;
**caractérisé en ce que** le procédé comprend
- le transport d'un flux secondaire du premier fluide de transfert de chaleur (106) depuis le premier tuyau d'entrée (4) à un premier volume de flux secondaire (103) et plus loin vers le premier tuyau de sortie (5),
- le transport d'un flux secondaire du second fluide de transfert de chaleur (109) depuis le second tuyau d'entrée (10) à un second volume de flux secondaire (107) séparé du premier volume de flux secondaire (103) par une paroi de séparation thermoconductrice secondaire (107) et plus loin vers le second tuyau de sortie (11), et
- la détection de l'entartrage sur la paroi de séparation thermoconductrice secondaire (107) en tant qu'indication de l'entartrage sur la paroi de séparation thermoconductrice primaire (7).

10. Procédé selon la revendication 9 de surveillance de l'entartrage dans un échangeur thermique tubulaire primaire (1) présentant :
- un volume de flux primaire (3) pour un premier fluide de transfert de chaleur (6), raccordé à un premier tuyau d'entrée (4) et à un premier tuyau de sortie (5) pour transporter le premier fluide de transfert de chaleur vers et depuis le volume de flux primaire, respectivement, et
- une tuyauterie de chauffage primaire (7) dans le volume de flux primaire (3) pour un second fluide de transfert de chaleur (9), raccordée à un second tuyau d'entrée (10) et à un second tuyau de sortie (11) pour transporter le second fluide de transfert de chaleur vers et depuis la tuyauterie primaire, respectivement ;
**caractérisé en ce que** le procédé comprend
- le transport d'un flux secondaire du premier fluide de transfert de chaleur (106) depuis le premier tuyau d'entrée (4) à un volume de flux secondaire (103) et plus loin vers le premier tuyau de sortie (5),
- le transport d'un flux secondaire du second fluide de transfert de chaleur (109) depuis le second tuyau d'entrée (10) à une tuyauterie de chauffage secondaire (107) séparée dans le volume de flux secondaire (103) et plus loin vers le second tuyau de sortie (11), et
- la détection de l'entartrage sur la tuyauterie de chauffage secondaire (107) en tant qu'indication de l'entartrage sur la tuyauterie de chauffage primaire (7).

11. Procédé selon la revendication 10, dans lequel la tuyauterie de chauffage secondaire (107) est formée du même matériau que la tuyauterie de chauffage primaire (7).

12. Procédé selon la revendication 10 ou 11, dans lequel la tuyauterie de chauffage secondaire (107) possède sensiblement la même forme et taille de section transversale que la tuyauterie de chauffage primaire (7).

13. Procédé selon l'une quelconque des revendications 9 à 12, comprenant en outre la commande des températures des flux secondaires des premier et second fluides de transfert de chaleur (106, 109) selon les températures des premier et second fluides de transfert de chaleur (6, 9) dans le premier tuyau d'entrée (4) et dans le second tuyau d'entrée (10), respectivement.

14. Procédé selon l'une quelconque des revendications 10 à 13, dans lequel la détection de l'entartrage comprend la détection de l'entartrage sur la surface intérieure de la tuyauterie de chauffage secondaire (107).

15. Procédé selon l'une quelconque des revendications 10 à 14, dans lequel la détection de l'entartrage comprend la détection de l'entartrage sur la surface extérieure de la tuyauterie de chauffage secondaire (107).

16. Procédé selon l'une quelconque des revendications 9 à 15, dans lequel l'entartrage est détecté au moyen de la tomographie de capacitance électrique.
